# EUROPEAN PATENT APPLICATION

(11) **EP 2 538 509 A1**
(43) Date of publication of application: **26.12.2012**
(21) Application number: 11171187.5
(22) Date of filing: 23.06.2011
(51) Int. Cl.: H02G 1/00, B23D 29/02

(54) **Scissors for electricians and the like**

(71) Applicant: Gimap S.r.l., 23834 Premana (Lecco) (IT)
(72) Inventor: Gianola, Enrico, 23834 PREMANA (Lecco) (IT)
(74) Representative: Lunati, Valerio

(57) **Abstract**

Provision is made for scissors for electricians (1) and the like comprising two first class levers (20) that can be mutually moved and a fulcrum (10) adapted to connect the first class levers (20) in a motion-admitting manner and to define a rotation axis (10a) of the levers (20); each of the first class levers (20) comprising a blade (22) defining an inner cutting edge (22a) adapted to carry out cutting and at least one of the blades (20) having, on the opposite side relative to the inner cutting edge (22a), an outer cutting edge (22c) suitable for carrying out working for chip removal.

## Description

The present invention relates to scissors for electricians and the like of the type pointed out in the preamble of the first claim.

It is known that scissors for electricians have substantial differences from common scissors, and in addition the handle is made of, or at least coated with insulating polymeric material, for safety reasons.

In addition to the aforesaid aspect, as scissors for electricians are submitted to particular work conditions, they are distinguishable from common scissors for the arrangement of the pivot pin of the blades determining a shorter length of the blades relative to the whole scissors length.

In fact, unlike scissors normally used in the household field or in offices, the pivot pin is such arranged as to define a distance between the fulcrum and the force-applying point much greater than that between the fulcrum and the cutting point. In detail, this arrangement of the pin makes scissors for electricians able to cut harder objects than those cut using common scissors to which the same force is applied.

Scissors for electricians are distinguishable from the other scissors also due to the sizes of the blades that must be adapted to guarantee an appropriate strength and the above described particular leverage.

In fact, blades in scissors for electricians usually appear to be short and characterised by great thickness so as to ensure a high strength and, therefore, longer life.

In addition, in order to facilitate and simplify the operations performed by the operator, scissors for electricians are characterised by the presence, at one of the two blades, of an eye or hole made at the cutting edge and adapted to receive the tube/cable to be cut. In detail, the operator opens the scissors widening the blades out, places the cable to be cut in the eye, at the section to be cut, and then cuts the cable by shutting the scissors.

Some examples of scissors for electricians are described in patent Nos. US7114208, US4625596 and CN201168967Y, each of them showing expedients aiming at improving the operator's work.

The known art mentioned above has some important drawbacks.

In fact, scissors for electricians do not enable net and clean cutting surfaces to be obtained, i.e. surfaces devoid of surface faults.

In particular, often the cutting operation is not very precise and therefore in the cutting region there are slits, cutting burrs or other surface faults giving the object a low aesthetic quality and in some cases causing a reduction in the strength and therefore the life of the piece itself.

The presence of these surface faults can in addition lead to a non-correct operation and, in particular, a difficult interaction with other components.

The operator, in order to limit the aforesaid problems, is often obliged to use suitable instruments or tools for improving the surface quality.

In conclusion, the cutting operation performed with scissors for electricians can require additional time, for optimal completion of the operation, and therefore can have a very high cost.

Under this situation, the technical task underlying the present invention is to devise scissors for electricians and the like capable of substantially obviating the mentioned drawbacks.

Within the scope of this technical task, it is an important aim of the invention to obtain scissors for electricians capable of ensuring practical and quick execution of the operation.

The technical task mentioned and the aim specified are achieved by scissors for electricians and the like as claimed in the appended Claim 1.

The features and advantages of the invention are hereinafter clarified by the detailed description of a preferred embodiment of the invention, with reference to the accompanying drawings, in which:
**Fig. 1** is a perspective view of the scissors for electricians and the like according to the invention;
**Fig. 2** shows a second perspective view of the scissors in Fig. 1 in a second configuration; and
**Fig. 3** shows a portion of the scissors seen in Fig. 2.

With reference to the drawings, the scissors for electricians and the like according to the invention are generally identified by reference numeral **1**.

They briefly comprise two first class levers **20** and a single fulcrum **10** defining a mutual rotation axis **10a** of the two first class levers 20, extending between a tip **11** and a handle **21**.

Each first class lever 20 has a handle 21, adapted to enable easy gripping of scissors 1, and a blade **22** adapted to carry out cutting and extending between the tip 1 and fulcrum 10.

Fulcrum 10 consists of a pivot pin, a bolt or other similar element adapted to mutually secure the two levers 20 and enable mutual rotation of said levers. In detail, this fulcrum 10 enables the two levers 20 to be moved so as to define a closed configuration and at least one open configuration of scissors 1 and to enable the blades 22 to carry out cutting by compression.

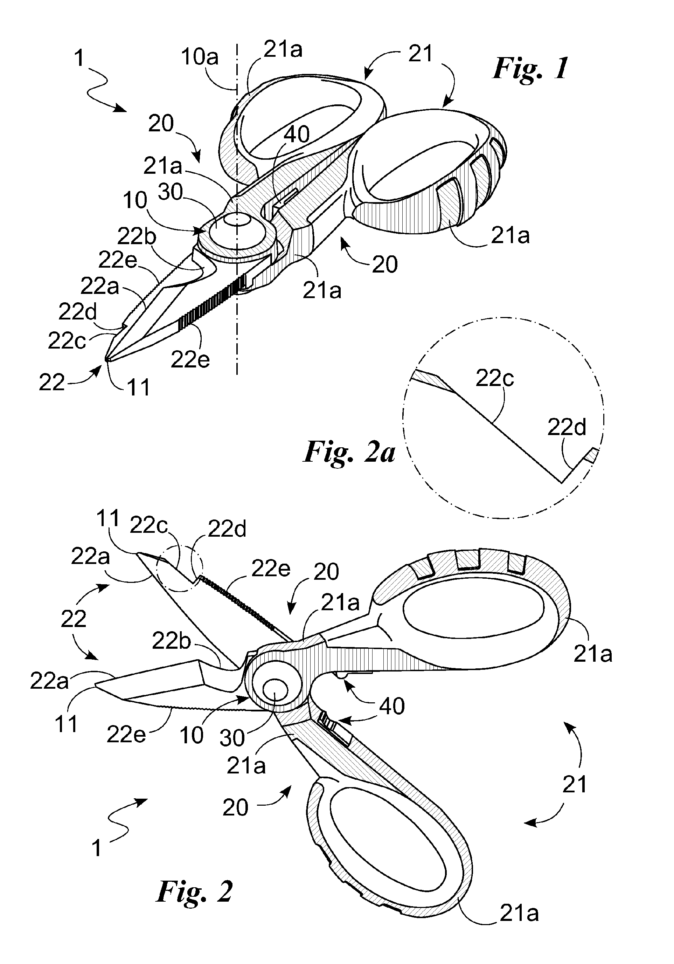

In the closed configuration (Fig. 1) the two first class levers 20 appear to be substantially in contact and, in detail, blades 22 at least partly overlap each other. On the contrary, in the open configuration (Fig. 2) the first class levers 20 and, in particular blades 22 are spread apart from each other so as to enable the object to be cut to be inserted between them.

For ensuring an appropriate strength to scissors 1, the two first class levers 20 and in particular blades 22 are made of steel the hardness of which is substantially included between 40 HRC and 70 HRC and, in particular, substantially included between 55 HRC and 65 HRC and, preferably, between 58 HRC and 60 HRC. Preferably, levers 20 are made of Mo-Va steel, i.e. steel having a relatively high molybdenum and vanadium content. Preferably, the molybdenum content is higher than 9% while the vanadium content does not exceed 5%.

Handles 21 therefore have a central core made of said Mo-Va steel so as to give more strength to the handles themselves.

Preferably, scissors 1 have a coating or cover **21a** on at least part of handles 21, which coating is made of polymeric material reinforced with glass fibre in a percentage substantially included between 25% and 35%. In detail, coating 21 a is made of synthetic polyamides, preferably Nylon, characterised by the addition of glass fibre in a percentage almost equal to 30%.

On the opposite side from handle 21 relative to the fulcrum, each first class lever 20 has a blade 22 on which an inner cutting edge **22a** can be identified, i.e. a cutting edge made on the edge of the outline facing the inner part of the scissors when they are in the open configuration, which inner cutting edge is therefore adapted to come into contact with the object, carrying out cutting.

The two inner cutting edges 22a are therefore made on the mutually facing portions of blades 22 in such a manner that, during mutual movement of the two levers 20 around the fulcrum, the two inner cutting edges come simultaneously into contacts with the object to be cut and therefore compress the object between them thus carrying out cutting of said object.

To facilitate the cutting operation in case of tubes or other cylindrical elements, scissors for electricians 1, at one of the two inner cutting edges 22a or, alternatively, at both of said inner cutting edges 22a, are provided with a sharp recess or notch **22b**, i.e. a recess adapted to receive the object to be cut and characterised by the presence of a sharp edge formed at the inner cutting edge 22a and adapted to carry out the cutting operation by compression when scissors 1 move to the closed configuration.

Advantageously, at least one of blades 22 also has an outer cutting edge **22c** adapted to carry out working for chip removal and preferably, a surface finishing work for chip removal.

The outer cutting edge 22c, shown in Fig. 2a, is formed on at least part of the outer side of the first blade 22, i.e. at least part of the external outline placed on the opposite side relative to the inner cutting edge 22a and therefore formed on the outer edge of blade 22. In particular, the outer cutting edge 22c preferably has a maximum extension equal to 40% of the length of blade 22, i.e. of the distance between tip 11 and the rotation axis 10a, and a minimum extension equal to 10% of the length of blade 22. Typically, said extension of the outer cutting edge 22c is in the range of 10% to 20%.

This outer cutting edge 22c is formed on the external outline of blade 22, i.e. the outline of blade 22 placed on the opposite side relative to the inner cutting edge 22a, and in particular it is formed on this external outline to a distance from the tip of the scissors for electricians 1 at least equal to 10% of the length of blade 22.

At the outer cutting edge 22c, the blade 22 defines an abutment **22d,** i.e. a surface substantially perpendicular to the outer cutting edge 22c and adapted, as better described in the following, to come into contact with the object to be worked for chip removal by means of the outer cutting edge 22c.

Finally, at least one of blades 22 is provided, on the external outline, with a knurled surface **22e** or other relief surface adapted to enable surface finishing operations to be carried out, such as roughing, polishing and cleaning of wood, plastic or metal surfaces.

Preferably, both blades substantially have a knurled surface 22e in the central part of the external outline so that one of the two blades 22 exhibits the knurled surface 22e on the central part of the external outline and has, in the vicinity of the scissors tip, the outer cutting edge 22c and the abutment 22d.

In order to improve ductility of scissors for electricians 1, said scissors have at least one support element **30** formed at the fulcrum and adapted to facilitate use of scissors 1, and crimping means **40** adapted to enable a crimping operation to be carried out.

This support element 30 can consist of a housing or other similar element protruding outwardly from one of the two first class levers 20 so as to define a support for the user's hand during use of scissors 1 and, in particular, when the outer cutting edge 22c has to be used.

Preferably, both the first class levers 20 have a support element 30.

Element 30 is preferably made of the same material as that of covers 21 a. In particular, the support element 30 is made of polymeric material reinforced with glass fibre in a percentage substantially included between 25% and 35% and, more particularly, it is made of synthetic polyamides, preferably Nylon, characterised by the addition of glass fibre in a percentage almost equal to 30%. The crimping means 40 consists for example of two counter-shaped profiles positioned at handles 21 in such a manner that they come mutually into contact when scissors 1 move to the closed configuration. In detail, as shown in Fig. 2, said crimping means 40 contemplates a first profile having an arc-shaped projection and a second profile having a cavity the shape of which matches that of said projection.

Use of scissors for electricians and the like described above as regards structure is the following.

In a first example, scissors 1 are used in a substantially standard manner, i.e. for carrying out a cutting operation utilising the inner cutting edges 22a belonging to blades 22.

In detail, the scissors for electricians 1 are grasped by the operator at the two handles 21 and then the two first class levers 20 are rotated relative to the fulcrum in such a manner as to bring scissors 1 to the open configuration, therefore widening the two inner cutting edges 22a out so as to enable introduction of the object to be cut into the recess 22b.

At this point, the operator cuts the object making the scissors for electricians 1 move from the open configuration to the closed configuration.

Alternatively, the scissors for electricians 1 can be used for carrying out working for chip removal using the outer cutting edge 22c.

In this case scissors 1, preferably disposed in the closed configuration, are grasped at handles 21 and then are brought into abutment against the object to be worked. In detail, scissors 1 are placed in such a manner as to have the outer cutting edge 22c adjacent to the surface to be worked and, preferably the abutment surface 22d in contact with said object.

The operator, by exerting force on the support element 30, moves scissors 1 making the outer cutting edge 22c slide on the surface to be worked so as to remove possible burrs or other surface faults and trim the surface.

Alternatively, this surface finish operation can be carried out, in almost the same manner as that described hereabove, utilising one of the two knurled surfaces. The scissors for electricians 1 can further be used for a crimping operation such as for obtaining a physical and electrical connection of an electric cable with a suitable termination or connector.

For carrying out this operation, the operator disposes scissors 1 in the open configuration, places the connector with the electric cable housed in a motion-admitting manner between the crimping means 40 and then carries out the crimping operation bringing scissors 1 to the closed configuration. In detail, he/she mutually clamps the crimping means 40 and then causes plastic deformation by mechanical crushing of the connector on the cable so as to mutually constrain the two components.

The invention enables achievement of important advantages.

A first advantage resides in the high versatility and practical use of the invention. This advantage is represented by the great number of operations and uses that can be done with scissors 1 so that the operator's work can be speeded up, since a frequent change of tools is no longer necessary.

In particular, due to the advantageous presence of the outer cutting edge 22c, scissors 1 enable burrs or other surface faults that usually remain on the surfaces submitted to cutting operations to be eliminated in a simple and quick manner, which faults could make possible assemblies of the cut object more complicated.

This surface finishing operation is also improved by the presence of the knurled surfaces 22e enabling a further surface finish to be carried out.

In detail, the outer cutting edge 22c allows the surface faults of bigger sizes such as burrs after cutting to be eliminated, while the knurled surface enables a particularly smooth and therefore trimmed surface to be obtained.

The practical use of these scissors 1 is also improved due to the presence of the support element 30 placed at the fulcrum and enabling a practical supporting point to be obtained on which force can be applied when the outer cutting edge 22c or one of the knurled surfaces is being used.

In addition, due to the presence of the abutment 22d, use of the outer cutting edge 22c is facilitated, and therefore the practical use of these scissors is further improved.

A further aspect aiming at increasing the scissors versatility is given by the presence of the crimping means 40 that, for instance, allows a crimping operation of a just cut cable to be carried out without being obliged to make use of a different tool.

A further advantage is the presence of recesses 22d enabling a cable to be disposed in scissors 1 with ease and therefore a cutting operation by compression to be carried out in a simple and practical manner.

Also advantageous is the choice of the materials of which blades 22 and handles 21 are made as they give the scissors long duration and high strength.

An important advantage also resides in the position of the outer cutting edge 22c that is made close to the tip of the scissors for electricians 1, so that its use is facilitated.

## Claims

1. Scissors for electricians (1) and the like comprising two first class levers (20) that can be mutually moved; and a fulcrum (10) adapted to connect said first class levers (20) in a motion-admitting manner and to define a rotation axis (10a) of said first class levers (20) in a way adapted to define at least one open position at which said first class levers (20) are widened out and a closed position at which said first class levers (20) are substantially in contact; each of said first class levers (20) comprising a blade (22) included between said fulcrum (10) and a tip (11) and defining an inner cutting edge (22a) adapted to carry out cutting of an object being worked when said first class levers (20) move from said at least one open configuration to said closed configuration, **characterised in that** at least one of said blades (20) on the opposite side relative to said inner cutting edge (22a), has an outer cutting edge (22c) adapted to carry out working for chip removal.

2. Scissors for electricians (1) as claimed in claim 1, wherein said blade (22) at said outer cutting edge (22c) and transversely thereof, has an abutment (22d) adapted to abut against said object when said object is being worked using said outer cutting edge (22c).

3. Scissors for electricians (1) as claimed in one or more of the preceding claims, wherein said outer cutting edge (22c) is separated from, and close to said tip (11).

4. Scissors for electricians (1) as claimed in one or more of the preceding claims, wherein said outer cutting edge (22c) has a length substantially included between 10% and 40% of the length of said blade (22) between said tip (11) and said rotation axis (10a).

5. Scissors for electricians (1) as claimed in the preceding claim, wherein said outer cutting edge (22c) has a length substantially in the range of 10% to 20% of the length of said blade (22) between said tip (11) and said rotation axis (10a).

6. Scissors for electricians (1) as claimed in one or more of the preceding claims, comprising at least one support element (30) extending at said fulcrum (10) and adapted to facilitate said working for chip removal.

7. Scissors for electricians (1) as claimed in the preceding claim, wherein said at least one support element (30) is made of a polymeric material reinforced with glass fibre in a percentage substantially included between 25% and 35%.

8. Scissors for electricians (1) as claimed in one or more of the preceding claims, wherein each of said first class levers (20) comprises a handle (21) placed on the opposite side from said blade (22) relative to said fulcrum and wherein said handle (21) has a coating (21 a) of polymeric material reinforced with glass fibre in a percentage substantially included between 25% and 35%.

9. Scissors for electricians (1) as claimed in the preceding claim, wherein said coating (21 a) is made of polymeric material to which glass fibre is added in a percentage substantially equal to 30%.

10. Scissors for electricians (1) as claimed in the preceding claim, comprising crimping means (40) at each of said handles (21), which means is adapted to enable crimping operations to be carried out.

11. Scissors for electricians (1) as claimed in one or more of the preceding claims, wherein at least one of said blades (22) has a recess (21 b) adapted to receive said object while said cut is being carried out.

12. Scissors for electricians (1) as claimed in one or more of the preceding claims, wherein at least one of said blades (22) has a knurled surface (22e) placed on the opposite side relative to said inner cutting edge (22a).

13. Scissors for electricians (1) as claimed in one or more of the preceding claims, wherein said blades (22) are made of steel the hardness of which is substantially included between 55 HRC and 65 HRC.
